# EUROPEAN PATENT APPLICATION

(11) **EP 2 014 172 A1**
(43) Date of publication of application: **14.01.2009**
(21) Application number: 07112062.0
(22) Date of filing: 09.07.2007
(51) Int. Cl.: A21D 13/00, A21D 13/06

(54) **Shaped wafer**

(71) Applicant: Nestec S.A., 1800 Vevey (CH)
(72) Inventor: Crisp, Richard, Exmouth, EX 5LB (GB); Nakayasu, Tatsushi, Ryugasaki-shi 301-0043 (JP); North, John, Strensall, Yorkshire Y032 5ZF (GB); Sundara, Venkata-Ramana, Clifton Moor, Yorkshire YO30 4WE (GB); Taylor, Jonathan, North Back Lane, Yorkshire Y061 1LL (GB)
(74) Representative: Thomas, Alain

(57) **Abstract**

The present invention relates to a no- or low-sugar wafer having a form that can not be moulded , and can also be described as a no- or low-sugar wafer with a developable surface where its shape does not have an unobstructed projected surface. It also relates to a method for making said wafer according to a three-stage process comprising a pre-baking step leading to an intermediate pre-baked wafer product with high moisture content, then a shaping step, and finally a drying step to form the final wafer product.

## Description

### FIELD OF THE INVENTION

The present invention relates to no- or low-sugar shaped wafers.

### BACKGROUND OF THE INVENTION

Wafer products are widely used in the confectionery field and are becoming more popular as consumers seek lighter but still indulgent confectionery products. The wafer category is therefore expected to grow further and there will be a demand for new no-sugar wafer products with interesting shapes.

Wafers are baked products which are made from wafer batter and have crisp, brittle and fragile consistency. They are thin, with an overall thickness usually between less than 1 and 4 mm and typical product densities range from 0.12 to 0.25 g/cm³. The surfaces are precisely formed, following the surface shape of the plates between which they were baked. They often carry a pattern on one surface or on both.

Two basic types of wafer are described by K.F.Tiefenbacher in "Encyclopaedia of Food Science, Food Technology and Nutrition p 417-420 - Academic Press Ltd London - 1993":
1) No- or low-sugar wafers. The finished biscuits contain from zero to a low percentage of sucrose or other sugars. Typical products are flat and hollow wafer sheets, moulded cones or fancy shapes.
2) High-sugar wafers. More than 10% of sucrose or other sugars are responsible for the plasticity of the freshly baked sheets. They can be formed into different shapes before sugar recrystallization occurs. Typical products are moulded and rolled sugar cones, rolled wafer sticks and deep-formed fancy shapes.

There are a number of patents which describe different methods of shaping sugar wafers while they are still hot, or after re-heating.

US 4 927 656 discloses a method for producing an edible vessel by a two-stage baking. This invention enables the heating process to be divided into a heating stage that is conducted at a factory, and a final heating stage performed at the sales outlets for ice cream. First, the batter is poured onto a heating plate and spread thereon and then appropriately heated. At this stage, the intermediate product has an appropriate skeleton and an appropriate amount of water, 4 to 20%, so that it can retain sufficient softness to prevent any damage during delivery to ice cream sale outlets. At the ice cream sale outlet, the product is reheated. After that reheating, the wafer product which is still hot and therefore foldable is shaped into a vessel shape and the shape is maintained during cooling. The sugar content of the wafer dough is from 30 to 60%. That high amount of sugar allows the heated food bases containing 15-19% water to be bent at an angle of about 180°.

EP 0 211 356 relates to a method and system for making ice cream waffles. A waffle batter containing sugar in an amount equal to at least 40% of the amount of flour is baked on baking surfaces whose shape differs from the final shape contemplated for said waffles. The baked waffles are then moulded before they have cooled significantly from their baking temperature, and finally cooled though said moulding step carried out at ambiant temperature.

WO 2000 019 829 discloses wafer batters which can be formed after the baking process, for example into hollow cylindrical shapes. The press moulds according to this invention can be located outside the baking oven. To ensure that the wafer sheets retain the elasticity required for shaping for a short time after the baking process, the wafer batter must have a sugar content of at least 23%. The patent specification also discloses that instead of sugar, a substitute with the technological properties of sugar may be used, such as trehalose. Another aspect of this invention is that it is important for the wafer sheets to stay in the warm state to have sufficiently high elasticity to be shaped. To keep the wafer sheets at the required high temperature, all workstations are located within a sealed enclosure, preferably pressurized with hot air.

US 6 254 916 provides a method of and an apparatus for the production of edible wafer rolls by baking an endless plastically deformable wafer strip from a flowable sugar-containing dough. This patent application discloses that sugar-containing wafers can be shaped between baking and cooling steps.

WO 8 001 130 discloses a method and apparatus for preparing moulded wafers in which a batter comprising 25 to 60% sugar w/w based on farinaceaous batter ingredient, is submitted to a two stage process. In a first stage, the batter is baked and, in the second stage, is introduced into a cooling mould to be cooled and compressed at the same time. The batter is still hot and foldable when it is introduced into the cooling and compressing mould.

Finally, K.F.Tiefenbacher" describes the manufacture of rolled wafer cones in which the cone shape is achieved by rolling the baked sheet while still hot. The sugar cones need to contain more than 25% sucrose.

The complexity of shapes produced from hot sugar wafers is limited by the requirement to keep them hot during the shaping process. In general the shapes are simple tubes or rolled cones.

In the case of no- or low-sugar wafers the wafers cannot be made flexible simply by heating them and so these wafers have the shape of the space between the baking plates which formed them, that is to say take the shape of the baking plates. The no- or low- sugar wafers may be flat, of the type that are layered with a filling cream and used as a centre for products such as KitKat®. It is also possible, by using a pair of shaped baking plates, to form hollow-wafers such as the wafer hemi-spheres used for Ferrero Rocher®. To change a production-line to produce different shaped hollow-wafers requires the time and investment to swap to a new set of baking plates.

It has not been possible to shape a no- or low-sugar wafer into shapes such as rolled cones or tubes as these shapes cannot be moulded between wafer plates. Furthermore the process of forming wafers into these shapes while hot does not work for no- or low-sugar wafers. As a result there are only very limited shapes of no- or low-sugar wafers on the market and each different shape requires a different baking plate.

### SUMMARY OF THE INVENTION

It is an object of this invention to provide a no- or low-sugar wafer in a form that can not be moulded.

It is a further object of the invention to provide a method for making a no- or low-sugar shaped wafer, according to a process comprising
a) a pre-baking step leading to an intermediate wafer product with high moisture content,
b) a shaping step, and
c) a drying step to form the final wafer product.

### FIGURES

Figure 1 shows a single fold cylindrical wafer made according to this invention.
Figure 2 shows a twice folded wafer made according to this invention.
Figure 3 shows a six-time folded wafer made according to this invention.
Figure 4 shows a quadruple cone flower-shaped wafer made according to this invention.
Figure 5 shows the quadruple cone flower shape made according to this invention and filled with ice-cream.

### DETAILED DESCRIPTION OF THE INVENTION

In the present specification, by "no- or low-sugar wafer" it has to be understood that the wafer comprises less than 10 percent sugar on a dry basis, the amount of sugar including the sugars intrinsically present in the flour or other ingredients of the wafer, and the added sugar (if any).

By wafer batter it has to be understood a batter for making wafers which comprises flour, water, baking powder and/or other leavening agents including for example yeasts or bacteria, and optionally a little sugar and other minor ingredients.

All percentages are in weight unless otherwise specified.

According to a first object of the invention, it is proposed to provide a no- or low-sugar wafer in a form that can not be moulded.

As far as the applicant knows, wafer forms that can be moulded comprise flat sheet, cup, half sphere or truncated sphere having a maximum volume not exceeding half the volume of the entire sphere, half egg-shape or egg-shape having a maximum volume not exceeding half the volume of the entire egg-shape, concave and convex shapes, and cones. There are only a limited number of shapes that are and can be moulded in the wafer industry, the main limitation being the demoulding stage at an industrial scale. For example, it is not at present possible to have moulded wafers with a cylinder shape, because such shapes can not be demoulded. Similarly, moulded shapes must have taper (sometimes called draft) to allow the shape to break free by creating clearance as soon as the shape moves away from the mould surface.
Therefore, in the present specification, by "shape that can not be moulded" or any similar expression, it has to be understood that the shape in question can presently not be moulded in the wafer industry.

The wafer of the present invention is low in sugar or does not contain added sugar, and the wafer comprises less than 10 percent sugar on a dry basis. Preferably, it contains less than 8 percent sugar, even more preferably, it contains less than 5 percent sugar and most preferably contains no added sugar.

If the wafer batter comprises sugar, said sugar is preferably sucrose but may also be dextrose, fructose, lactose, maltose, trehalose, high fructose corn syrup, corn syrup (sometimes called glucose syrup), corn syrup solids, invert sugar, honey, maple sugar, molasses and the like, or mixtures thereof.

The batter suitable for this invention does not require to contain added sugar; however, if a fermented batter is desired sugar is needed as food for the yeast. Yeast cannot metabolise all sugars and some types of sugar are not suitable for that purpose. For example, yeast cannot metabolise lactose. If sucrose is used only as a food for yeast, the quantity necessary to achieve the yeast growth is low, and depending on the fermentation time, sucrose will not remain in the final product as it will be converted into glucose, fructose, ethanol and CO₂. Furthermore, adding larger quantities of various sugars may be desirable to alter the taste and/or texture of the wafer, without moving into the region of high-sugar wafers as defined by K.F.Tiefenbacher.

The wafer batter may further or optionally comprise minor ingredients such as baking powder, oil, fat, emulsifier, salt, flavourings, colourings, spices, etc.

The flour is generally wheat flour but may also be wholemeal flour, rice flour, or other cereal flours.
Baking powder is generally sodium bicarbonate but may also be ammonium bicarbonate, or any other suitable baking powder or a mixture thereof.

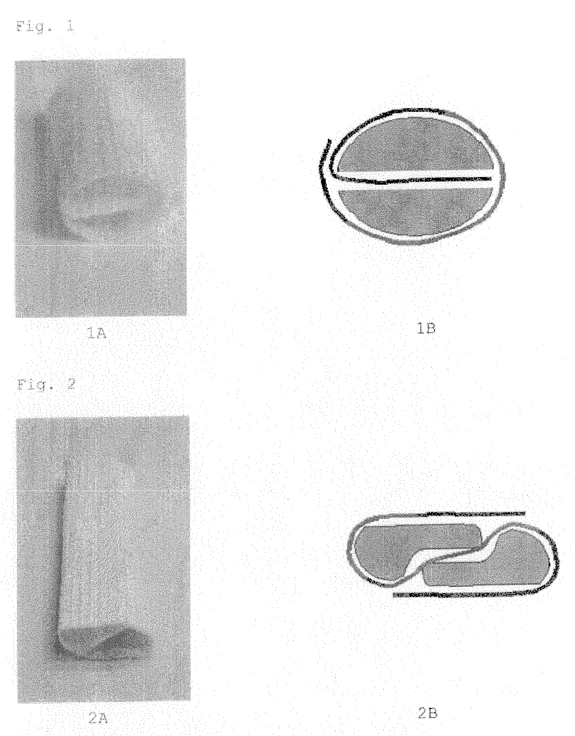

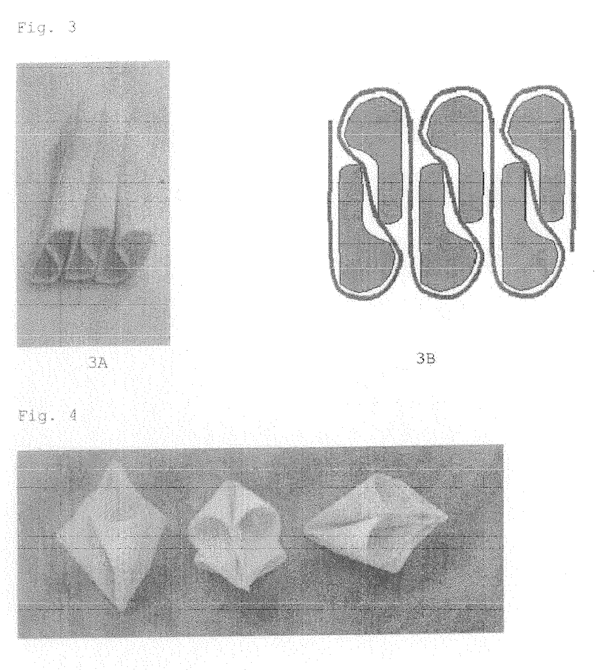

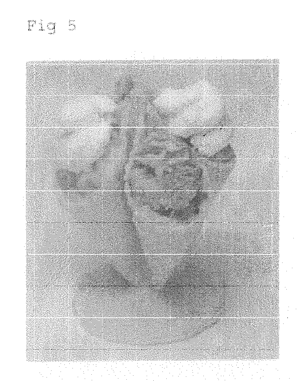

The present invention allows to have shapes that can not be moulded in no- or low-sugar wafers. Examples of such shapes are single fold cylindrical wafers as pictures in Fig. 1A and drawn in Fig. 1B, twice folded wafers as pictures in Fig. 2A and drawn in Fig. 2B, or more than twice folded wafers as exemplified in Fig. 3, representing a six-time folded wafer pictured in Fig. 3A and drawn in Fig. 3B. Further shapes that can not be moulded include a quadruple cone flower-shaped as shown in Fig. 4 and Fig. 5. The only limit to the shapes that can be given to no-or low-sugar wafers according to the present invention is imagination.

It is another object of the present invention to propose a method for making a no- or low-sugar shaped wafer, cpmprising
a) a pre-baking step: initiating baking of the no- or low-sugar wafer batter to a certain moisture content to obtain a pre-baked wafer
b) a shaping step: shaping the pre-baked wafer when still moist, and
c) a drying step: drying the wafer to the final moisture of the wafer product.

The wafer batter is an homogeneous suspension consisting of a mixture of all the ingredients of the batter, that is to say mainly flour and water, optionally sugar, small amounts of baking powder and other minor ingredients. Usually, the wafer batter has a moisture content of 45 to 65%.

In the first step of the method according to the present invention, the baking of the no- or low-sugar wafer batter is initiated to obtain a pre-baked wafer having a certain moisture content. This step starts as a usual wafer-baking step, and the batter is deposited onto one of a pair of flat wafer baking plates which are subsequently closed to bake the wafer. However, the scope of the invention is not limited to the use of baking plates and they can be substituted by any other suitable baking means, such as sandwiching batter between two heated flexible steel conveyors to form a continuous wafer sheet, for example.

Baking is usually considered as a global process which gives its structure to the baked product and leads to the final moisture content of the wafer. In the present invention, baking is split in two main stages.

The pre-baking according to the first step of the present method is the stage wherein structure formation and completion occurs. At the end of the pre-baking step, gassing, gelatinisation of the starch and skin formation have occurred. The batter still contains most of the initial water. At the end of the pre-baking step, the no-or low-sugar pre-baked wafer still has a moisture content of between approximately 60% and 90% of the initial water content of the batter. The no- or low-sugar pre-baked wafer thus has a moisture content of approximately 27 to 58%, preferably 30 to 55%, more preferably 35 to 45% w/w

In the second step of the method according to the present invention, the pre-baked wafer is withdrawn from the plates or the baking means and is transferred to the shaping device at the end of the pre-baking stage. A control of the moisture content of the pre-baked wafer is important at this stage. The pre-baked wafer must contain at least 27% w/w water, and preferably more than 35% water. That high moisture content ensures the flexibility and the shapability of the pre-baked wafer. That characteristic allows to shape the pre-baked wafer just after the pre-baking and before the drying, once the pre-baked wafer has acquired its final structure and is still malleable. At the end of the pre-baking stage, the pre-baked wafer will remain flexible as long as it does not dry out.

A particular advantage of the present invention is to provide a method of shaping wafer after a pre-baking stage even though the wafer is not hot.

The shaping can be made according to any of the known methods of shaping such as stamping, pressing, bending, cutting, folding, winding, etc. For this shaping stage, the no- or low-sugar pre-baked wafer does not need to be hot to remain flexible due to its high moisture content and can even be shaped at room temperature. However, in practice, there is likely to be residual heat from the earlier baking process. The pre-baked wafer may therefore be as hot as 100°C. Evaporation will cool the pre-baked wafer but it is important that the wafer does not dry out too much in order to keep the flexibility related to its high moisture content. It is practically much easier to keep a wafer moist during a complex shaping procedure than to keep a wafer hot. Moreover, the no- or low sugar pre-baked wafer, which is still moist after the pre-baking stage of the invention, is much more elastic than the hot high-sugar wafers which are shaped when still hot in state of the art. That helps in forming complex shapes.

At this stage, the no- or low-sugar wafer can be formed into various shapes that can not be obtained by moulding. These include wafer rolls, rolled wafer cones, and complex shapes such as those obtained through folding. The Japanese art of paper folding, *origami,* provides many such shapes. It would not be possible to produce these shapes by simply baking a no- or low-sugar wafer between shaped wafer plates such as the conventional hollow wafer plates.

The third step of the method according to the present invention is a drying step in which the moisture content of the shaped pre-baked wafer is decreased to the final moisture of the no- or low-sugar wafer. Drying can be achieved according to any of the known drying processes; for example, it is possible to use radiant heaters, infrared heaters, hot air oven, pulsed air oven, microwave oven or the like.

During the third step, the structure which had been completed at the end of the pre-baking step remains unchanged and the shape that was given in the shaping stage is kept. Moreover, flavour and colour are developed during the drying step.

The moisture content of the shaped pre-baked wafer, which as previously mentioned is around between 30 and 60%, decreases to the final moisture of the usual wafer products. At the end of the drying step, the shaped no- or low-sugar wafer has a moisture content which is less than 10%, preferably less than 5% and even more preferably less than 2%. After the drying step, it is advisable to control the wafer moisture in order to ensure that it is suitable for conditioning or for any other use like coating or cream filling.

One of the main characteristics of this invention is the division of the usual unitary baking stage into two different and separated steps. In the present invention, the total baking time is the addition of the pre-baking time plus the drying time. Generally, it may be considered that the pre-baking stage lasts from 15 to 30% of the total baking time and that the drying stage lasts from 70 to 85% of the total baking time. More particularly, and considering a total baking time of for example 120 seconds, the first pre-baking stage lasts from about 20 to about 30 seconds. The pre-baking is stopped in order to allow shaping of the batter. After the shaping step, the drying begins and lasts from about 90 to 100 seconds. These timings may change according to the baking temperature, the type of baking or drying means used or the quantity of batter in the oven.

The wafer of the invention may be used in the confectionery field, and may be coated with chocolate or chocolate analogues. It can be in contact with any type of product usually associated with the confectionery field such as a fat-based paste, praline, nougat, chocolate, jam, icing, caramel, or sugar, for example. It can also be used in combination with any other type of product perceived as sweet by the consumer, such as ice-cream, sorbet, fresh or frozen fruits, nuts, or the like. These type of products are intended, in the present specification, to belong to the confectionery field.

The wafer of the invention may also be used in other food products, outside the confectionery field. Examples of use of the wafer of the invention outside the confectionery field are salty products eaten at aperitif, or as starters, for example. The wafer can be sold or eaten in combination with cheese, salty creams or egg-containing matrixes. Or the wafer of the invention can be formed into a non-mouldable cup shape that may be filled with shrimps. A helical shaped no- or low-sugar wafer can also be used as a dip to be eaten with mayonnaise for example.
One preferred shape is a rolled tube or rolled cone.

The present invention therefore relates to a no- or low-sugar wafer having a shape that can not be moulded, and to a method for making such shaped no- or low-sugar wafer. Another way to describe the shaped no- or low-sugar wafer of the invention is described below, in a more limited way but which describes the same invention.

In this way of describing the invention the no- or low-sugar wafer has a developable surface and its shape does not have an unobstructed projected surface. In a similar way, the method provides a no- or low-sugar wafer with a developable surface, wherein the shape of the wafer does not have an unobstructed projected surface, by a three stage process comprising as described above the pre-baking step, the shaping step and the drying step.

A developable surface is a surface that can be formed from a flat sheet without stretching. {*Why Buildings Stand Up. The Strength of Architecture.* Mario Salvadori. p183 W.W. Norton and Co (2002)}. For example a sheet of paper bent into a half-cylinder and then released flattens by itself. The half cylinder is a developable surface. However, if we cut a rubber ball in half, producing a small spherical dome, the dome cannot be flattened onto a flat surface. It only flattens if we cut a large number of radial cuts in it or if, assuming it is very thin, it can be stretched onto a flat surface. The dome has a non-developable surface. Rolled wafer tubes or rolled wafer cones are have developable surfaces while moulded wafer cups or cones do not.
By *unobstructed projected surface* we mean that there is a point from which the whole of one surface is visible. A flat sheet has an unobstructed projected surface, as does a half cylinder, but a rolled sheet does not. Looking at a rolled sheet from any angle some of the surface of the sheet will always be hidden from view by other parts of the sheet, so a rolled sheet is one example of a shape with a developable surface which does not have an unobstructed projected surface.

The invention will now be described with an example which does not limit the scope of the present invention.

### EXAMPLE: Quadruple-cone flower shaped wafer

Batter recipe :

| | |
|---|---|
| Wheat flour | 500g |
| Sodium bicarbonate | 0.3g |
| Tap water | 500g |

1^{st} baking condition
Baking temperature 150 degree C
Baking time 10 - 12 sec.
Making shape:
Bake the flexible wafer by 1st baking process.
Cut the wafer into 7cm x 7cm square.

Form the shape by folding the wafer using "chopsticks": First draw together the midpoints of the two opposite sides of the wafer square with a pair of chopsticks. Then, holding the wafer with the original chopsticks use a second pair of chopsticks at 90° to the first, approaching from beneath, to draw together the other two sides to form a flower shape with four cones.(see figure 4). Four cone-shaped formers made out of paper or ceramic are placed within the wafer cones to maintain the shape of the wafer during drying.

Put the shaped wafer into microwave. The drying condition is as follows.

Heat wafer for 10 sec and move paper cones slightly to allow paper cone to be taken off after completion of drying. Repeat this 3 times.

Remove paper cones from wafer and heat for a final 30 sec.

## Claims

1. A no- or low-sugar wafer having a form that can not be moulded.

2. A no- or low-sugar wafer according to claim 1 wherein the wafer comprises less than 10 percent sugar, preferably less than 8 percent sugar, more preferably less than 5 percent sugar, and most preferably comprises no added sugar.

3. A wafer according to any of the preceding claims which is in the form of a rolled tube, a rolled cone or a quadruple-cone flower.

4. A food product comprising at least one no- or low-sugar wafer according to any of the preceding claims.

5. A food product according to claim 4 belonging to the confectionery field.

6. A food product according to claim 4 not belonging to the confectionery field.

7. A method for making a no- or low-sugar shaped wafer, according to a comprising
a) a pre-baking step leading to an intermediate wafer product with a moisture content of more than 27%,
b) a shaping step, and
c) a drying step to form the final wafer product.

8. The method according to claim 7 wherein
- step a) lasts from 15 to 30% of the total baking time represented by the addition of step a) and step c), and
- step c) lasts from 70 to 85% of the total baking time.

9. The method according to claim 7 or claim 8 wherein the shape of the no- or low- sugar wafer is non-mouldable.
